# EUROPÄISCHE PATENTSCHRIFT

(11) **EP 4 186 150 B1**
(45) Veröffentlichungstag und Bekanntmachung des Hinweises auf die Patenterteilung: **17.06.2026**
(21) Anmeldenummer: 21749163.8
(22) Anmeldetag: 23.07.2021
(51) Int. Cl.: H02K 7/116, H02K 37/14, H02K 1/2733, H02K 21/14, H02K 1/14, H02K 21/18

(54) **AKTUATOR FÜR EINE FAHRZEUGBAUGRUPPE**
ACTUATOR FOR A VEHICLE ASSEMBLY
ACTIONNEUR POUR ENSEMBLE VÉHICULE

(30) Priorität: 23.07.2020 DE 102020209303
(43) Veröffentlichungstag der Anmeldung: 31.05.2023
(73) Patentinhaber: Brose Fahrzeugteile SE & Co. Kommanditgesellschaft, Coburg, 96450 Coburg (DE)
(72) Erfinder: WITZEL, Timo, 36103 Flieden (DE); BRIETZ, Dominik, 97447 Gerolzhofen (DE); KIFER, Alexander, 95511 Mistelbach (DE); PFALZGRAF, Helmut, 97246 Eibelstadt (DE); SOMMER, Uwe, 96528 Effelder (DE); SUSEMIHL, Thomas, 97078 Würzburg (DE); MERGL, Christian, 97475 Zeil/Main (DE)
(74) Vertreter: Maikowski & Ninnemann Patentanwälte Partnerschaft mbB
(86) Internationale Anmeldenummer: PCT/EP2021/070715
(87) Internationale Veröffentlichungsnummer: WO 2022/018274

(56) Entgegenhaltungen:
- EP-A1- 0 038 739
- DE-C- 431 571
- DE-C2- 2 911 439
- US-A- 4 381 465
- US-B2- 10 714 991

## Beschreibung

Die Erfindung betrifft einen Aktuator nach dem Oberbegriff des Anspruchs 1.

Ein derartiger Aktuator umfasst einen elektrischen Motor, der einen Stator und einen um eine Drehachse zu dem Stator drehbaren Rotor aufweist.

Ein solcher Aktuator kann insbesondere zum Verstellen einer Fahrzeugbaugruppe dienen. In diesem Fall weist der Aktuator beispielsweise ein durch den elektrischen Motor antreibbares Getriebe auf, das einen Abtrieb zum Verstellen der Fahrzeugbaugruppe ausbildet. Der Rotor steht mit dem Getriebe in Wirkverbindung derart, dass über den Rotor eine Verstellkraft in das Getriebe und darüber in die Fahrzeugbaugruppe eingeleitet werden kann.

Ein solcher Aktuator soll beispielsweise zum Verstellen einer Fahrzeugbaugruppe in Form eines Innenraumteils, zum Beispiel einer Baugruppe eines Fahrzeugsitzes oder einer anderen Verstellbaugruppe, zum Beispiel an einem Armaturenbrett, an einer Konsole (zum Beispiel in Form einer Ablageeinrichtung, eine Abdeckeinrichtung, einer Klappeneinrichtung oder dergleichen), dienen. Ein solcher Aktuator kann aber auch zum Antreiben anderer Baugruppen dienen, zum Beispiel für eine Vibrationseinrichtung in einem Fahrzeugsitz.

Grundsätzlich ist davon auszugehen, dass in zukünftigen Innenraumszenarien in einem Fahrzeug ganz unterschiedliche Baugruppen elektromotorisch antreibbar sein können, wobei zum Antreiben der unterschiedlichen Baugruppen einzelne Aktuatoren eingesetzt werden, die an der jeweiligen Baugruppe angebracht werden und zum Beispiel über eine zentrale Steuerung gesteuert werden.

Bei einem solchen Aktuator besteht grundsätzlich ein Bedürfnis nach einer bauraumeffizienten Anordnung, insbesondere um den Aktuator an Baugruppen einsetzen zu können, ohne dadurch den erforderlichen Bauraum für die zugeordnete Baugruppe nennenswert zu erhöhen. Bei einem solchen Aktuator besteht zudem grundsätzlich der Wunsch nach einer kostengünstigen Bauform, bei einfacher Herstellung, zuverlässigem Betrieb und zudem variabler Verwendbarkeit.

Ein Aktuator der beschriebenen Art kann beispielsweise als sogenannter Klauenpolschrittmotor ausgestaltet sein. Bei einem solchen Klauenpolschrittmotor ist der Stator üblicherweise durch Statorteile in Form von Statorblechen verwirklicht, um die herum Statorspulen gewickelt sind, wie dies beispielsweise in der EP 0 780 956 A1 oder der EP 0 043 068 B1 beschrieben ist.

Bei einem solchen Klauenpolschrittmotor ist der Stator üblicherweise aus einer Mehrzahl von Statorteilen zusammengesetzt. Aus der JP 4216369 B2 ist zum Beispiel ein Klauenpolschrittmotor bekannt, bei dem der Stator durch zwei Paare von Statorteilen gebildet ist, die mit Statorpolen einander zugewandt sind, wobei jedem Paar von Statorteilen eine Statorspule zugeordnet ist, um einen magnetischen Fluss in die (Rückschlussbleche verwirklichenden) Statorteile einzuspeisen. Die Statorspulen sind hierbei nicht um die Statorteile gewickelt, sondern sind benachbart und seitlich zu den Statorteilen angeordnet und somit zu den Statorteilen in exzentrischer Weise versetzt.

Aus der DE 10 2006 034 567 A1 ist ein Elektromotor mit einem mehrteiligen Stator bekannt, bei dem Statorteile mit einander zugewandten Statorpolen aneinander angesetzt sind. Ein Rotor ist zu dem so gebildeten Stator drehbar und mit einem Getriebe zur Bereitstellung eines Abtriebs wirkverbunden.

Die EP 0 038 739 A1 offenbart einen Elektromotor, der ein inneres Statorteil und zwei äußere Statorteile aufweist, die mit Statorpolen ineinander greifen.

Die US 4,381,465 offenbart eine Statoranordnung eines kleinen Elektromotors, bei der Statorteile mit Statorpolen ineinandergreifen.

Aufgabe der vorliegenden Erfindung ist es, einen Aktuator zur Verfügung zu stellen, der einfach und bauraumgünstig ausgebildet sein kann, bei variabler Verwendbarkeit zum Antreiben einer Fahrzeugbaugruppe, insbesondere einer Innenraumbaugruppe.

Diese Aufgabe wird durch einen Gegenstand mit den Merkmalen des Anspruchs 1 gelöst.

Demnach weist der Stator ein inneres Statorteil, ein erstes äußeres Statorteil und ein zweites äußeres Statorteil auf. Das innere Statorteil, das erste äußere Statorteil und das zweite äußere Statorteil sind entlang der Drehachse aneinander angereiht. Das innere Statorteil bildet an einer ersten, axial dem ersten äußeren Statorteil zugewandten Seite eine Anordnung von ersten inneren Statorpolen und an einer zweiten, axial dem zweiten äußeren Statorteil zugewandten Seite eine Anordnung von zweiten inneren Statorpolen aus. Die ersten inneren Statorpole und die zweite innere Statorpole sind integral und einstückig miteinander verbunden.

Bei dem Aktuator ist der Stator demnach (mindestens) dreiteilig ausgebildet, mit einem inneren Statorteil und beidseitig dazu angeordneten, axial versetzten äußeren Statorteilen. Das innere Statorteil bildet hierbei erste innere Statorpole aus, die dem ersten äußeren Statorteil zugewandt sind und mit dem ersten äußeren Statorteil zusammenwirken. Das innere Statorteil bildet zudem zweite innere Statorpole aus, die dem zweiten äußeren Statorteil zugewandt sind und mit dem zweiten äußeren Statorteil zusammenwirken. Die Statorpole wirken hierbei mit dem jeweils zugeordneten, äußeren Statorteil zur Ausbildung eines magnetischen Kreises zusammen, sodass über das innere Statorteil zwei magnetische Kreise gebildet werden.

Weil die ersten Statorpole und die zweiten Statorpole des inneren Statorteils integral und einstückig miteinander geformt sind, ergibt sich eine einfache Bauform, bei der das innere Statorteil insgesamt integral und einstückig geformt sein kann. Zur Ausbildung der zwei magnetischen Kreise ist ein einziges inneres Statorteil in Zusammenwirken mit den beidseits angeordneten, äußeren Statorteilen hinreichend. Es ergibt sich eine einfache Bauform bei einfacher Fertigung und zudem stabiler Ausgestaltung.

In einer Ausgestaltung weist das innere Statorteil einen ersten Körperabschnitt auf, an dem die ersten Statorpole geformt sind. Der erste Körperabschnitt ist integral und einstückig mit einem zweiten Körperabschnitt geformt, an dem die zweiten Statorpole angeordnet sind. Das innere Statorteil kann somit insgesamt integral und einstückig geformt sein, mit zwei Körperabschnitten, die einerseits die ersten inneren Statorpole und andererseits die zweiten inneren Statorpole ausbilden.

Durch die einteilige Ausführung des inneren Statorteils kann insbesondere ein Prozessschritt bei der Fertigung des Stators eingespart werden, indem kein Verbindungsschritt zur Verbindung von gesonderten inneren Statorteilen erforderlich ist (wie er erforderlich wäre, wenn die inneren Statorpole an gesonderten Bauelementen ausgebildet wären). Dies ermöglicht eine Reduktion in der Fertigungszeit und auch in den Fertigungskosten.

Beispielsweise kann das innere Statorteil integral und einstückig als Stanz-Biege-Teil geformt sein. Das Statorteil kann auf diese Weise aus einem Blech, vorzugsweise einem weichmagnetischen Blech, geformt werden, wobei das Statorteil zur Fertigung aus dem Blech gestanzt und sodann in eine beispielsweise runde, einer zylindrischen Grundform entsprechende Form gebogen werden kann, sodass das innere Statorteil den Rotor drehbar aufnehmen kann.

Auch die äußeren Statorteile sind beispielsweise jeweils als Stanz-Biege-Teile beispielsweise aus einem weichmagnetischen Material geformt.

In einer Ausgestaltung bildet das erste äußere Statorteil eine Anordnung von ersten äußeren Statorpolen zum elektromagnetischen Zusammenwirken mit den ersten inneren Statorpolen aus. Zusätzlich oder alternativ kann das zweite äußere Statorteil eine Anordnung von zweiten äußeren Statorpolen zum elektromagnetischen Zusammenwirken mit den zweiten inneren Statorpolen ausbilden. Die ersten inneren Statorpole des inneren Statorteils sind den ersten äußeren Statorpolen des ersten äußeren Statorteils zugewandt, beispielsweise indem die Statorpole nach Art von axial erstreckten Fingern ineinander eingreifen. Entsprechend sind die zweiten inneren Statorpole des inneren Statorteils den zweiten äußeren Statorpolen des zweiten äußeren Statorteils zugeordnet und zugewandt, beispielsweise indem die zweiten inneren Statorpole und die zweiten äußeren Statorpole nach Art von axial erstrecken Fingern ineinander eingreifen. Es werden somit zwei Paare von Statorpolanordnungen gebildet, die jeweils einen magnetischen Kreis ausbilden und jeweils einer Statorspule zugeordnet sein können, sodass ein magnetischer Fluss in den jeweils zugeordneten magnetischen Kreis eingespeist werden kann.

In einer Ausgestaltung greifen die ersten äußeren Statorpole und die ersten inneren Statorpole derart ineinander ein, dass die ersten äußeren Statorpole und die ersten inneren Statorpole entlang einer um die Drehachse gerichteten Umfangsrichtung alternierend aneinander angereiht sind. Zusätzlich oder alternativ greifen die zweiten äußeren Statorpole und die zweiten inneren Statorpole derart ineinander ein, dass die zweiten äußeren Statorpole und die zweiten inneren Statorpole entlang einer um die Drehachse gerichteten Umfangsrichtung alternierend aneinander angereiht sind. Die inneren Statorpole und die jeweils zugeordneten äußeren Statorpole erstrecken sich vorzugsweise jeweils nach Art von Fingern axial von einem zugeordneten Körperabschnitt des jeweiligen Statorteils. Die fingerartigen Statorpole des inneren Statorteils und des jeweils zugeordneten äußeren Statorteils greifen hierbei in verschachtelter Weise ineinander ein, sodass - betrachtet entlang der Umfangsrichtung - eine Abfolge von Statorpolen geschaffen wird, bei der auf einen inneren Statorpol jeweils ein äußerer Statorpol und umgekehrt folgt. Es ergibt sich ein erster magnetischer Kreis zwischen den ersten inneren Statorpolen und den ersten äußeren Statorpolen und ein zweiter magnetischer Kreis zwischen den zweiten inneren Statorpolen und dem zweiten äußeren Statorpolen. Jeder magnetische Kreis kann über eine zugeordnete Statorspule gespeist werden, um auf diese Weise den beispielsweise permanentmagnetischen Rotor nach Art eines Klauenpolschrittmotors in eine Drehbewegung zu versetzen.

In einer Ausgestaltung sind die ersten inneren Statorpole und die zweiten inneren Statorpole betrachtet entlang einer gedachten, das innere Statorteil umfänglich um die Drehachse einhüllenden Hüllfläche, trapezförmig. Die einhüllende Hüllfläche entspricht einer gedachten, zylindrischen Fläche, die den zylindrischen Anteil des Stators einhüllt.

In komplementärer Weise zu den inneren Statorpolen können vorzugsweise die äußeren Statorpole geformt sein, sodass die ersten äußeren Statorpole in komplementärer Weise in Eingriff mit den ersten inneren Statorpolen und die zweiten äußeren Statorpole in komplementärer Weise in Eingriff mit den zweiten inneren Statorpolen stehen. Es ergibt sich ein vergleichsweise kleiner Luftspalt zwischen benachbarten Statorpolen.

In einer Ausgestaltung sind die ersten inneren Statorpole und zweiten inneren Statorpole betrachtet entlang einer Umfangsrichtung um die Drehachse um einen Winkelversatz zueinander versetzt. Die ersten inneren Statorpole sind periodisch entlang der Umfangsrichtung um die Drehachse angeordnet. Genauso sind auch die zweiten inneren Statorpole periodisch entlang der Umfangsrichtung um die Drehachse angeordnet. In der periodischen Abfolge der ersten inneren Statorpole und der zweiten inneren Statorpole besteht hierbei jedoch ein Winkelversatz, sodass die ersten inneren Statorpole und die zweiten inneren Statorpole nicht axial fluchtend miteinander angeordnet sind, sondern in Umfangsrichtung um einen gewissen Winkel zueinander versetzt sind.

Dieser Winkelversatz kann beispielsweise kleiner oder gleich einem Viertel des Periodenwinkels sein, wobei der Periodenwinkel durch den Winkelabstand zweier benachbarter erster innerer Statorpole oder entsprechend den Winkelabstand zweier benachbarter zweiter innerer Statorpole bestimmt ist.

Bei einem 10-poligen Stator beispielsweise, bei dem fünf erste innere Statorpole fünf ersten äußeren Statorpolen und fünf zweite innere Statorpole fünf zweiten äußeren Statorpolen zugeordnet sind, beträgt der periodische Winkelabstand zwischen benachbarten ersten inneren Statorpolen und entsprechend zwischen benachbarten zweiten inneren Statorpolen 72°. Entspricht der Winkelversatz zwischen den ersten inneren Statorpolen und den zweiten inneren Statorpolen beispielsweise einem Viertel des periodischen Winkelabstands, so beträgt der Winkelversatz 18°.

Durch einen solchen Winkelversatz zwischen den inneren Statorpolen und entsprechend den zugeordneten magnetischen Kreisen kann ein Schrittmotor nach Art eines Klauenpolschrittmotors mit vergleichsweise kleiner Schrittweite erhalten werden. Der Rotor kann hierbei permanentmagnetisch ausgestaltet sein, mit an dem Rotor angeordneten Magnetanordnungen, die jeweils einem der Magnetkreise zugeordnet sind und bei winkelversetzter Anordnung der Magnetkreise ohne Winkelversatz zueinander ausgerichtet sein können.

Der Motor weist eine erste Statorspule und eine zweite Statorspule auf. Das innere Statorteil bildet zumindest einen ersten inneren Eingriffsabschnitt aus, der in die erste Statorspule eingreift und somit die erste Statorspulen trägt. Zudem bildet das innere Statorteil zumindest einen zweiten inneren Eingriffsabschnitt aus, der in die zweite Statorspule eingreift und somit die zweite Statorspule trägt.

Die Eingriffsabschnitte sind radial außerhalb der Statorpole geformt, beispielsweise nach Art von Laschen an umgebogenen Enden des als Stanz-Biege-Teil geformten inneren Statorteils. An den inneren Eingriffsabschnitten können hierbei Fasen geformt sein, die ein einfaches Einführen der Eingriffsabschnitte in den Spulenkörper der jeweiligen Statorspule ermöglichen.

Vorteilhafterweise sind auch an den äußeren Statorteilen äußere Eingriffsabschnitte geformt, die zum Eingreifen in die Statorspulen dienen und gemeinsam mit den Eingriffsabschnitten des inneren Statorteils die Statorspulen tragen. Beispielsweise kann das erste äußere Statorteil zumindest einen ersten äußeren Eingriffsabschnitt aufweisen, der überlappend mit dem zumindest einen ersten inneren Eingriffsabschnitt angeordnet ist und in die erste Statorspule eingreift. Zusätzlich oder alternativ kann das zweite äußere Statorteil zumindest einen zweiten äußeren Eingriffsabschnitt aufweisen, der überlappend mit dem zumindest einen zweiten inneren Eingriffsabschnitt angeordnet ist und in die zweite Statorspule eingreift. Auch die äußeren Eingriffsabschnitte können nach Art von Laschen an Enden der als Stanz-Biege-Teile geformten äußeren Statorteile geformt sein, wobei die äußeren Eingriffsabschnitte gemeinsam mit den inneren Eingriffsabschnitten des inneren Statorteils die Statorspulen tragen und somit den jeweiligen magnetischen Kreis schließen.

Beispielsweise kann das innere Statorteil zwei erste innere Eingriffsabschnitte und zwei zweite innere Eingriffsabschnitte ausbilden. Zudem kann ein jedes äußeres Statorteil zwei äußere Eingriffsabschnitte ausbilden. Die ersten äußeren Eingriffsabschnitte des ersten äußeren Statorteils können hierbei in einer Sandwich-Anordnung überlappend und alternierend mit den ersten inneren Eingriffsabschnitten des inneren Statorteils angeordnet sein und somit mit den ersten inneren Eingriffsabschnitten ein Blechpaket bilden, an dem die erste Statorspule angeordnet ist. Entsprechend können auch die zweiten äußeren Eingriffsabschnitte des zweiten äußeren Statorteils in einer Sandwich-Anordnung überlappend und alternierend mit den zweiten inneren Eingriffsabschnitten des inneren Statorteils angeordnet sein und somit mit den zweiten inneren Eingriffsabschnitten ein Blechpaket bilden, an dem die zweite Statorspule angeordnet ist.

Auch die äußeren Eingriffsabschnitte können an einer Kante jeweils eine Fase aufweisen, sodass die Eingriffsabschnitte leicht mit den Statorspulen gefügt werden können.

In einer Ausgestaltung weisen die erste Statorspule und die zweite Statorspule jeweils einen Spulenkörper und eine an dem Spulenkörper angeordnete Spulenwindung auf. Der Spulenkörper kann beispielsweise eine Eingriffsöffnung ausbilden, in die die inneren Eingriffsabschnitte des inneren Statorteils und auch die jeweils zugeordneten äußeren Eingriffsabschnitte des äußeren Statorteils eingreifen. Durch das Vorsehen von Fasen an den Eingriffsabschnitten kann das Einführen in die Eingriffsöffnung erleichtert und das Fügen des Stators somit vereinfacht sein.

Der Spulenkörper bildet, in einer Ausgestaltung, einen Wickelabschnitt aus, an dem die Spulenwindung angeordnet ist. Vorzugsweise weist der Wickelabschnitt hierbei eine ballige Form auf, sodass scharfe Kanten am Wickelabschnitt vermieden werden und die Spulenwindung in bauraumgünstiger Weise um den Wickelabschnitt gewickelt werden kann. Es ergibt sich eine kraftschlüssige und dicht gepackte Anordnung des Wickeldrahts an dem Wickelabschnitt, wobei zusätzlich eine Formmasse, zum Beispiel nach Art einer Vergussmasse, an dem Wickelabschnitt angeordnet sein kann, um die Spulenwindung zu kapseln. Auf diese Weise kann eine Drahtbewegung aufgrund elektromagnetischer Kräfte im Betrieb verhindert und somit eine Geräuschentwicklung an den Statorspulen vermieden werden.

In einer Ausgestaltung weist der Motor eine Steuereinheit auf. Die Spulenwindung einer jeden Statorspule ist hierbei mit zumindest einem Drahtende mit der Steuereinheit elektrisch verbunden, beispielsweise indem das Drahtende stoffschlüssig (materialschlüssig) an eine Platine der Steuereinheit angeschlossen ist.

Denkbar ist hierbei auch, dass die Statorspule Anschlussstifte aufweist, mit denen Drahtenden der zugeordneten Spulenwindung verbunden sind und die das Herstellen einer Lötverbindung mit einer Platine der Steuereinheit erleichtern können.

In einer Ausgestaltung weist der Rotor eine der Anordnung der ersten inneren Statorpole zugeordnete, erste Magnetanordnung und eine der Anordnung der zweiten inneren Statorpole zugeordnete, zweite Magnetanordnung auf. Die erste Magnetanordnung und die zweite Magnetanordnung sind hierbei axial entlang der Drehachse zueinander versetzt. Eine jede Magnetanordnung kann beispielsweise durch eine Anordnung von einem oder mehreren Permanentmagneten oder unterschiedliche magnetisierte Abschnitte an einem magnetischen Körper gebildet sein. Die Magnetanordnungen wirken mit den magnetischen Kreisen der Statorpole zusammen und ermöglichen ein schrittweises Antreiben des Rotors nach Art eines Klauenpolschrittmotors, bei dem der Rotor in diskreten Schritten verstellt werden kann, indem der Rotor mit den daran angeordneten Magnetanordnungen dem magnetischen Feld an den magnetischen Kreisen des Stators folgt.

Hierbei kann beispielsweise die erste Magnetanordnung dazu ausgebildet sein, mit den ersten inneren Statorpolen zum Erzeugen eines Drehmoments an dem Rotor zusammenzuwirken, während die zweite Magnetanordnung ausgebildet ist, mit den zweiten inneren Statorpolen zum Erzeugen eines Drehmoments an dem Rotor zusammenzuwirken. Die erste Magnetanordnung wirkt somit mit dem über die ersten inneren Statorpole gebildeten, ersten magnetischen Kreis zusammen. Die zweite Magnetanordnung wirkt demgegenüber mit dem über die zweiten inneren Statorpole gebildeten, zweiten magnetischen Kreis zusammen. Gemeinsam erzeugen die Magnetanordnungen in Zusammenwirken mit den magnetischen Kreisen ein Drehmoment an dem Rotor.

Vorzugsweise können die Magnetanordnungen hierbei in einfacher Weise zueinander zum Beispiel an einer Motorwelle des Rotors positioniert werden. Beispielsweise weist die erste Magnetanordnung zumindest ein erstes Formschlusselement auf, während die zweite Magnetanordnung zumindest ein zweites Formschlusselement ausbildet. Das zumindest eine erste Formschlusselement und das zumindest eine zweite Formschlusselement werden bei Anbringen der Magnetanordnungen zum Beispiel an der Motorwelle miteinander in Eingriff gebracht, sodass die Magnetanordnungen selbsttätig in eine vorbestimmte Drehstellung zueinander gebracht und somit rotatorisch zueinander positioniert werden.

Ein jedes Formschlusselement kann beispielsweise an einer axial der jeweils anderen Magnetanordnung zugewandten Stirnseite der jeweiligen Magnetanordnung geformt sein, beispielsweise in Form einer Erhebung oder in Form einer Vertiefung. Die jeweils andere Magnetanordnung weist ein komplementäres Formschlusselement auf, sodass die Formschlusselemente miteinander in Eingriff gebracht und somit die Magnetanordnungen in definierter Weise zueinander rotatorisch positioniert werden können.

In anderer Ausgestaltung kann an dem Rotor aber auch nur eine (einzige) Magnetanordnung vorgesehen sein, die integral ausgebildet ist und als Einheit an der Motorwelle angeordnet werden kann. Die Magnetanordnung ist hierbei dazu ausgebildet, sowohl mit den ersten inneren Statorpolen als auch mit den zweiten inneren Statorpolen zum Erzeugen eines Drehmoments an dem Rotor zusammenzuwirken. Die Magnetanordnung kann beispielsweise einen oder mehrere Permanentmagnete oder unterschiedlich magnetisierte Abschnitte an einem magnetischen Körper aufweisen.

In einer Ausgestaltung weist der Aktuator ein durch den elektrischen Motor antreibbares Getriebe auf, das einen Abtrieb zum Verstellen der Fahrzeugbaugruppe ausbildet. Deser Abtrieb ist beispielsweise durch ein Abtriebsrad ausgebildet, das durch das Getriebe angetrieben werden kann. Das Abtriebsrad kann beispielsweise über ein oder mehrere Getrieberäder mit der Motorwelle wirkverbunden sein, sodass das Abtriebsrad über den Motor angetrieben und in eine (schrittweise) Drehbewegung versetzt werden kann. Über das Abtriebsrad kann eine Verstellkraft an eine zugeordnete Fahrzeugbaugruppe abgegeben werden, sodass über das Abtriebsrad die Fahrzeugbaugruppe verstellt werden kann.

Beispielweise kann das Abtriebsrad hierbei ein erstes Abtriebselement und ein von dem ersten Abtriebselement unterschiedliches, zweites Abtriebselement ausbilden. Das erste Abtriebselement kann beispielsweise an einer ersten Seite des Abtriebsrads geformt sein, während das zweite Abtriebselement an einer von der ersten Seite abgewandten, zweiten Seite des Abtriebsrads gebildet ist.

Über die unterschiedlichen Abtriebselemente kann eine variable Schnittstelle zur Verbindung des Aktuators mit einer zu verstellenden Fahrzeugbaugruppe geschaffen werden. So kann eine Fahrzeugbaugruppe wahlweise mit dem ersten Abtriebselement oder dem zweiten Abtriebselement gekoppelt werden, um eine Verstellkraft in die Fahrzeugbaugruppe einzuleiten. Das erste Abtriebselement kann beispielsweise nach Art eines Ritzels geformt sein, das über eine Außenverzahnung mit einem zugeordneten Verzahnungselement der Fahrzeugbaugruppe in Eingriff steht und darüber die Fahrzeugbaugruppe antreiben kann. Das zweite Abtriebselement kann demgegenüber beispielsweise durch einen Verzahnungseingriff geformt sein, der eine Innenverzahnung nach Art eines Hohlrads ausbildet und formschlüssig zum Beispiel mit einer Welle gekoppelt werden kann.

In anderer Ausgestaltung kann der Aktuator zum Antreiben zum Beispiel einer Vibrationseinrichtung dienen, wobei der Aktuator in diesem Fall über ein mit dem Rotor verbundenes Unwuchtelement eine Vibration erzeugt. Der Motor kann in diesem Fall beispielsweise fest mit einer anzutreibenden Baugruppe verbunden sein, wobei durch Antreiben des Rotors das Unwuchtelement in eine Drehbewegung versetzt wird und dadurch eine vibrierende Bewegung an dem Motor bewirkt, die auf die anzutreibende Baugruppe übertragen wird und somit die anzutreibende Baugruppe zum Vibrieren anregt.

Das Unwuchtelement ist bei dieser Ausgestaltung mit dem Rotor verbunden und weist einen zur Drehachse des Rotors exzentrischen Abschnitt zur Bereitstellung einer Unwucht an dem Rotor auf. Der exzentrische Abschnitt erstreckt sich zum Beispiel radial von dem Rotor derart, dass das Unwuchtelement insgesamt eine exzentrische Form aufweist und somit eine Unwucht an dem Rotor zur Verfügung stellt.

In einer Ausgestaltung ist das Unwuchtelement außerhalb des durch das innere Statorteil, das erste äußere Statorteil und das zweite äußere Statorteil gebildeten Stators angeordnet. Das Unwuchtelement befindet sich somit (axial) außerhalb des Stators und ist dabei mit dem Rotor verbunden. Wird der Rotor zum Drehen angetrieben, dreht sich das Unwuchtelement außerhalb des Stators. Es ergibt sich eine einfache Anordnung mit einfachen Bauteilen, die einfach gefügt werden können.

In anderer Ausgestaltung ist das Unwuchtelement innerhalb des inneren Statorteils angeordnet. Das Unwuchtelement befindet sich hierbei axial am Orte des inneren Statorteils und ist radial innerhalb des inneren Statorteils angeordnet. Das Unwuchtelement kann hierbei beispielsweise zwischen einer ersten Magnetanordnung, die den ersten inneren Statorpolen zugeordnet ist, und einer zweiten Magnetanordnung, die den zweiten inneren Statorpolen zugeordnet ist, angeordnet sein. In diesem Fall ist das Unwuchtelement somit in den Motor integriert. Es ergibt sich eine bauraumeffiziente Anordnung, bei der das Unwuchtelement keinen zusätzlichen Bauraum erfordert.

Ein Aktuator der beschriebenen Art kann grundsätzlich mit ganz unterschiedlicher Polzahl ausgebildet werden. So kann der Aktuator beispielsweise 8-polig, 10-polig oder 12-polig ausgebildet sein, wobei auch andere Polzahlen denkbar sind. Die Polzahl bezieht sich auf die Gesamtzahl der Statorpole eines jeden magnetischen Kreises. Bei einem 10-poligen Motor weist das innere Statorteil beispielsweise fünf erste innere Statorpole und fünf zugeordnete erste äußere Statorpole für den ersten magnetischen Kreis und fünf zweite innere Statorpole und fünf zugeordnete zweite äußere Statorpole für den zweiten magnetischen Kreis auf.

Die Statorteile dienen insbesondere als magnetische Rückschlussbleche zur Bereitstellung der unterschiedlichen magnetischen Kreise, wobei einem jeden magnetischen Kreis vorzugsweise genau eine Statorspule zur Einspeisung eines (zeitlich variablen) magnetischen Flusses zugeordnet ist. Die Statorteile sind vorzugsweise jeweils integral und einstückig aus einem weichmagnetischen Material, insbesondere einem Weicheisen, geformt.

Der der Erfindung zugrunde liegende Gedanke soll nachfolgend anhand der in den Figuren dargestellten Ausführungsbeispiele näher erläutert werden. Es zeigen:
- Fig. 1: eine Ansicht eines Ausführungsbeispiels eines Aktuators;
- Fig. 2: eine andere Ansicht des Aktuators;
- Fig. 3: eine Ansicht des Aktuators, ohne ein Gehäuse;
- Fig. 4: eine Ansicht einer einen Motor ausbildenden Baugruppe des Aktuators;
- Fig. 5: eine gesonderte Ansicht einer Motorwelle mit daran angeordneten Magnetanordnungen;
- Fig. 6: eine Ansicht eines Ausführungsbeispiels eines aus Statorteilen bestehenden Stators, in einer Explosionsansicht mit zugeordneten Statorspulen;
- Fig. 7: eine zusammengesetzte Ansicht des Stators;
- Fig. 8: eine perspektivische Explosionsansicht der Statorteile des Stators;
- Fig. 9A: eine Ansicht eines Ausführungsbeispiels von Magnetanordnungen eines Rotors, in einer getrennten Stellung;
- Fig. 9B: eine Ansicht der Magnetanordnungen, in einer gefügten Stellung;
- Fig. 10: eine Ansicht eines anderen Ausführungsbeispiels einer an einer Motorwelle angeordneten Magnetanordnung;
- Fig. 11: eine Ansicht eines Ausführungsbeispiels einer Statorspule;
- Fig. 12A: eine Seitenansicht der Statorspule;
- Fig. 12B: eine Schnittansicht entlang der Linie A-A gemäß Fig. 12A;
- Fig. 13: eine Ansicht eines Ausführungsbeispiels eines Aktuators mit einem Motor, der ein Unwuchtelement zum Erzeugen einer Vibration aufweist; und
- Fig. 14: eine Ansicht eines anderen Ausführungsbeispiels eines Aktuators mit einem Motor, der ein Unwuchtelement aufweist.

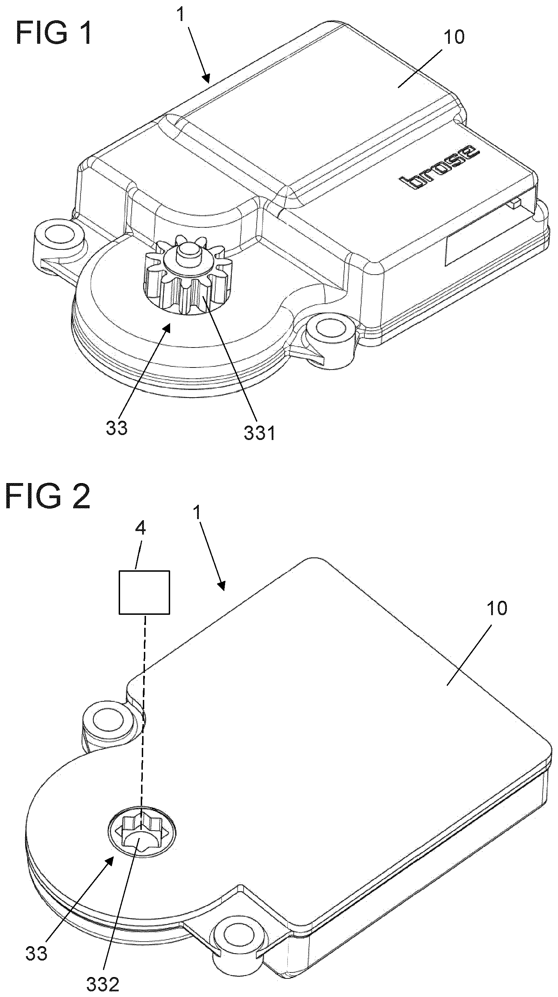

Fig. 1 und 2 zeigen ein Ausführungsbeispiel eines Aktuators 1, der zum Verstellen einer Fahrzeugbaugruppe dient, zum Beispiel einer Innenraumbaugruppe, zum Beispiel an einem Fahrzeugsitz, am Armaturenbrett, an einer Konsole, an einer Lüftungseinrichtung oder einer anderen Verstelleinrichtung im Fahrzeug.

Der Aktuator 1 weist ein Gehäuse 10 auf, das einen elektrischen Motor und ein Getriebe einfasst. Das Getriebe umfasst unter anderem ein Abtriebsrad 33, das einen Abtrieb zum Antreiben einer Fahrzeugbaugruppe 4 ausbildet, wie dies schematisch in Fig. 2 dargestellt ist.

Wie dies aus den Ansichten gemäß Fig. 1 und 2 von unterschiedlichen Seiten des Aktuators 1 ersichtlich ist und wie dies nachstehend auch noch erläutert werden soll, weist das Abtriebsrad zwei unterschiedliche Abtriebselemente 331, 332 auf, über die eine Kopplung mit der Fahrzeugbaugruppe 4 erfolgen kann und die wahlweise durch einen Anwender verwendet werden können. Ein erstes Abtriebselement 331 weist hierbei die Form eines Ritzels auf. Ein zweites Abtriebselement 332, das an einer dem Ritzel 331 abgewandten Seite des Abtriebsrads 33 geformt ist, weist demgegenüber die Form eines Verzahnungseingriffs mit einer Innenverzahnung zur Kopplung beispielsweise mit einer Welle auf.

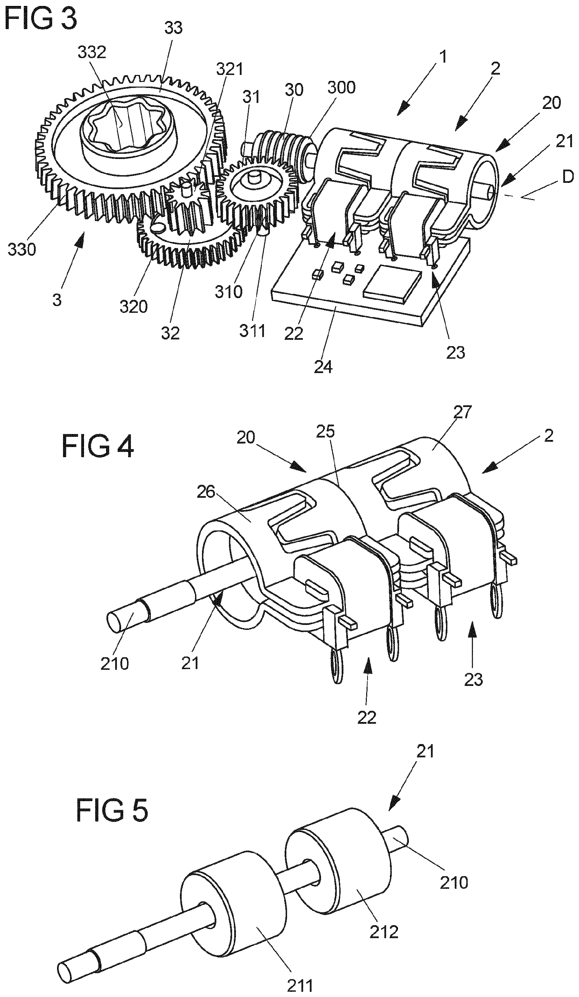

Fig. 3 zeigt den Aktuator 1 ohne das Gehäuse 10, Fig. 4 zeigt den elektrischen Motor 2 des Aktuators 1, und Fig. 5 zeigt ein Ausführungsbeispiel einer Motorwelle 210 des elektrischen Motors 2 mit daran angeordneten Magnetanordnungen 211, 212.

Bei dem dargestellten Ausführungsbeispiel ist der elektrische Motor 2 durch einen Klauenpolschrittmotor verwirklicht, der einen Stator 20 und einen zu dem Stator 20 um eine Drehachse D drehbaren Rotor 21 aufweist. Der Rotor 21 trägt ein Getriebeelement in Form einer Antriebsschnecke 30, die mit einer Schneckenverzahnung 300 mit einer Stirnradverzahnung 310 eines Getrieberades 31 des Getriebes 3 kämmt und somit zur Krafteinleitung in das Getriebe 3 dient.

Das Getriebe 30 weist eine Mehrzahl von Getrieberädern 31, 32 auf, die einen Übersetzungsstrang zur Kraftübertragung von dem Elektromotor 2 auf das Abtriebsrad 33 ausbilden. Das Getrieberad 31 bildet ein Ritzel 311 aus, das mit einer Stirnradverzahnung 320 des Getrieberads 32 kämmt. Das Getrieberad 32 bildet ein Ritzel 321 aus, das mit einer Stirnradverzahnung 330 des Abtriebsrads 33 kämmt. Weil die Ritzel 311, 321 der Getrieberäder 31, 32 einen (deutlich) kleineren Durchmesser als die Stirnradverzahnungen 310, 320, 330 der Getrieberäder 31, 32 und des Abtriebsrads 33 aufweisen, stellt das Getriebe 3 eine (Kraft-)Übersetzung zum Verstellen der Fahrzeugbaugruppe 4 bereit.

Das Getriebe 30 ist gemeinsam mit dem elektrischen Motor 2 in dem Gehäuse 10 des Aktuators 1 eingefasst, wie dies in Fig. 1 und 2 dargestellt ist. Über die Abtriebselemente 331, 332 des Abtriebsrads 33 wird hierbei ein Abtrieb zur Verfügung gestellt, über den eine variable Kopplung mit einer Fahrzeugbaugruppe 4 erfolgen kann. Die Abtriebselemente 331, 332 können hierbei wahlweise durch einen Anwender verwendet werden, sodass sich eine Variabilität in der Kopplung des Aktuators 1 mit einer zu verstellenden Fahrzeugbaugruppe 4 ergibt.

Der Stator 20 des elektrischen Motors 2 ist durch Statorteile 25, 26, 27 ausgebildet, die Rückschlussbleche zum Leiten eines (zeitlich veränderlichen) magnetischen Flusses bereitstellen. Die Statorteile 25, 26, 27 verwirklichen zwei magnetische Kreise, denen jeweils eine Statorspule 22, 23 mit einer daran angeordneten Spulenwindung 220, 230 zum Einspeisen eines magnetischen Flusses zugeordnet ist, wie dies aus Fig. 4 ersichtlich ist. Über den eingespeisten magnetischen Fluss kann in Zusammenwirken mit den (permanentmagnetischen) Magnetanordnungen 211, 212 der Rotor 21 schrittweise verstellt werden, wobei die Schrittweite durch die Anordnung und Abfolge von Statorpolen des Stators 20 bestimmt ist, wie dies nachstehend noch erläutert werden soll. Einem jeden magnetischen Kreis ist hierbei eine Magnetanordnung 211, 212 des Rotors 21 zugeordnet.

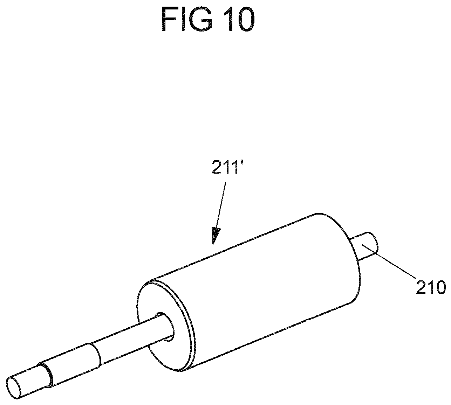

Hinzuweisen ist an dieser Stelle darauf, dass der Rotor 21 auch nur eine (einzige) Magnetanordnung 211' aufweisen kann, wie dies nachstehend anhand von Fig. 10 noch erläutert werden soll.

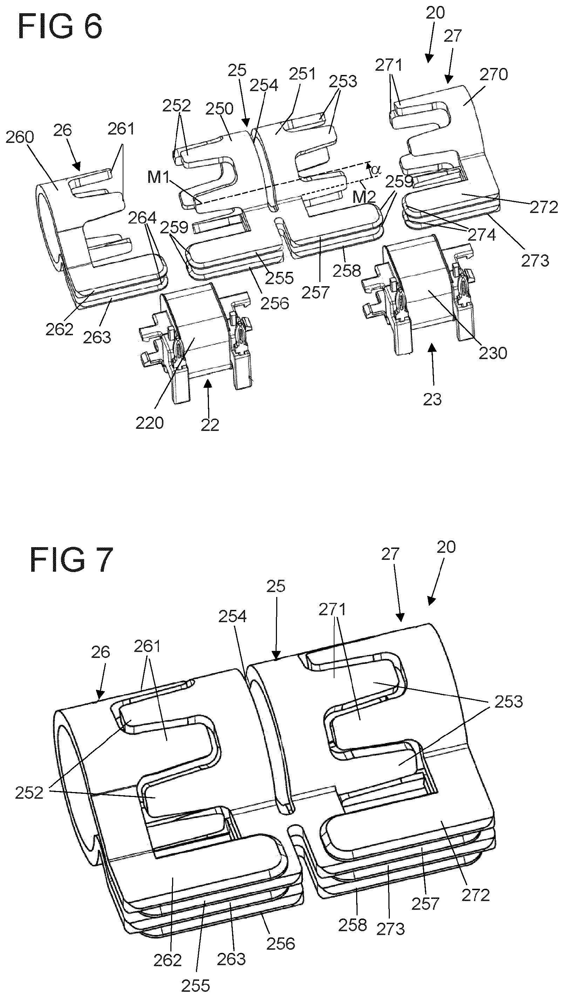

Bei einem in Fig. 6-8 dargestellten Ausführungsbeispiel eines Stators 20 wird der Stator 20 durch ein inneres Statorteil 25 und zwei mit dem inneren Statorteil 25 gefügte, äußere Statorteile 26, 27 gebildet. In gefügter Stellung, dargestellt in Fig. 7, sind die Statorteile 25, 26, 27 entlang der Drehachse D, um die der Rotor 21 zu dem Stator 20 drehbar ist, aneinander angereiht und miteinander gefügt derart, dass Statorpole 252, 253, 261, 271 fingerartig ineinander eingreifen und dabei für jeden magnetischen Kreis entlang einer um die Drehachse D gerichteten Umfangsrichtung aneinander angereiht sind.

Das innere Statorteil 25 ist integral und einstückig als ein Bauteil geformt. Das innere Statorteil 25 ist beispielsweise als Stanz-Biege-Teil aus einem weichmagnetischen Blech geformt.

Ebenso sind die äußeren Statorteile 26, 27 jeweils integral und einstückig beispielsweise als Stanz-Biege-Teile aus einem weichmagnetischen Blech geformt.

Das innere Statorteil 25 bildet erste innere Statorpole 252 aus, die einem ersten äußeren Statorteil 26 der äußeren Statorteile 26, 27 zugewandt sind und zwischen erste äußere Statorpole 261 des zugeordneten äußeren Statorteils 26 greifen, wie dies aus einer Zusammenschau von Fig. 6 und 7 ersichtlich ist. Die ersten inneren Statorpole 252 sind hierbei an einem ringförmigen Körperabschnitt 250 des inneren Statorteils 25 geformt und erstrecken sich axial von dem Körperabschnitt 250. Die ersten äußeren Statorpole 261 sind demgegenüber an einem ringförmigen Körperabschnitt 260 des ersten äußeren Statorteils 26 geformt und erstrecken sich axial hin zu dem inneren Statorteil 25.

Das innere Statorteil 25 bildet zudem zweite innere Statorpole 253 aus, die fingerartig zwischen zweite äußere Statorpole 271 eines zweiten äußeren Statorteils 27 greifen, wie dies aus einer Zusammenschau von Fig. 6 und 7 ersichtlich ist. Die zweiten inneren Statorpole 253 sind an einem zweiten ringförmigen Körperabschnitt 251 des inneren Statorteils 25 geformt und erstrecken sich axial entlang der Drehachse D hin zu dem zweiten äußeren Statorteil 27. Die zweiten äußeren Statorpole 271 sind an einem ringförmigen Körperabschnitt 270 des zweiten äußeren Statorteils 27 geformt und erstrecken sich axial hin zum inneren Statorteil 25.

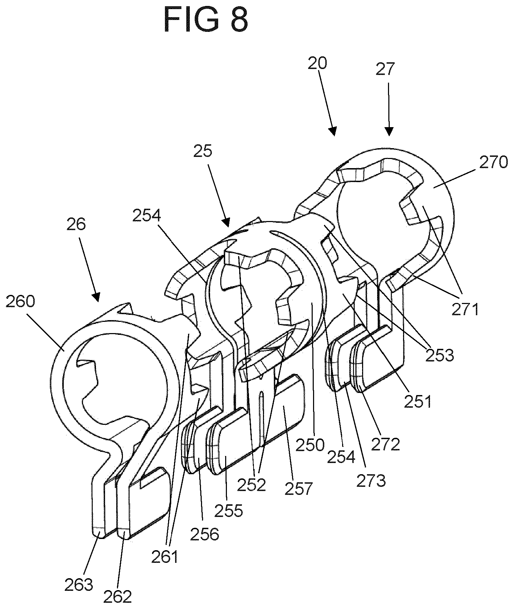

Wie dies aus Fig. 6 in Zusammenschau mit Fig. 8 ersichtlich ist, ist der erste Körperabschnitt 250 des inneren Statorteils 25 über eine Anordnung von umfänglich erstreckten Schlitzen 254, nämlich zwei aneinander angereihten Schlitzen 254, von dem zweiten Körperabschnitt 251 getrennt. Auf diese Weise wird eine magnetische Entkopplung der magnetischen Kreise erreicht derart, dass ein über die Statorspulen 22, 23 eingespeister magnetischer Fluss im Wesentlichen ausschließlich in dem jeweils zugeordneten Magnetkreis fließt.

Wie dies aus Fig. 7 ersichtlich ist, sind die Statorpole 252, 261; 253, 271 der jeweiligen Magnetkreise derart verschachtelt zueinander angeordnet, dass die Statorpole 252, 261; 253, 271 in Umfangsrichtung alternierend aneinander angereiht sind. Betrachtet entlang einer einhüllenden Hüllfläche, die den zylindrischen Anteil des Stators 20 einhüllt, sind die Statorpole 252, 261; 253, 271 hierbei trapezförmig, wobei sich die Statorpole 252, 261; 253, 271 jeweils hin zu dem jeweils anderen Statorteil 25, 26, 27 verjüngen und unter Ausbildung eines vergleichsweise schmalen, gleichmäßigen Spaltes ineinander eingreifen.

Die Magnetanordnungen 211, 212 an der Motorwelle 210 des Rotors 21 laufen jeweils innerhalb des zugeordneten, durch die Statorpole 252, 261; 253, 271 gebildeten magnetischen Kreises um und werden durch Einspeisung eines magnetischen Flusses angetrieben. Nach dem Funktionsprinzip des Klauenpolschrittmotors folgt der Rotor 21 hierbei dem magnetischen Feld des Stators 20, sodass der Rotor 21 schrittweise verstellt werden kann.

Die Statorpolanordnungen der magnetischen Kreise sind, wie dies in Fig. 6 eingezeichnet ist, um einen Winkelversatz α in Umfangsrichtung zueinander versetzt. So besteht der Winkelversatz α zwischen der Mittellinie M1 eines ersten inneren Statorpols 252 und der Mittellinie M2 des axial zu dem ersten inneren Statorpol 252 benachbarten, zweiten inneren Statorpols 253. Der Winkelversatz α entspricht dem Winkel, um den die periodischen Anordnungen der ersten inneren Statorpole 252 und der zweiten inneren Statorpole 253 in Umfangsrichtung zueinander versetzt sind. Der Winkelversatz α ist beispielsweise kleiner als 1/4 des Periodenwinkels der inneren Statorpole 252, 253.

Bei dem dargestellten Ausführungsbeispiel ist der Stator 20 10-polig ausgestaltet. Entsprechend sind fünf ersten inneren Statorpolen 252 fünf erste äußere Statorpole 261 zugeordnet, und fünf zweiten inneren Statorpolen 253 sind fünf zweite äußere Statorpole 271 zugeordnet. Es ergibt sich für jeden magnetischen Kreis eine 10-polige Anordnung. Der Periodenwinkel der inneren Statorpole 252, 253 beträgt 72°. Beträgt der Winkelversatz α gerade 1/4 dieses Periodenwinkels, so beträgt der Winkelversatz α 18°.

Durch den Winkelversatz α kann eine vergleichsweise kleine Schrittweite für den Schrittmotor eingestellt werden. Die Magnetanordnungen 211, 212 des Rotors 21 sind hierbei fluchtend miteinander angeordnet und in der Anordnung ihrer Magnetpole in Umfangsrichtung nicht zueinander versetzt.

Jedem magnetischen Kreis ist eine Statorspule 22, 23 zugeordnet, wie dies aus Fig. 4 in Zusammenschau mit Fig. 6 ersichtlich ist. Die (Rückschlussbleche verwirklichenden) Statorteile 25, 26, 27 bilden hierbei an Enden der bei Fertigung als Stanz-Biege-Teile zylindrisch geformten Statorteile 25, 26, 27 Eingriffsabschnitte 255, 256, 262, 263; 257, 258, 272, 273, die im Sandwich miteinander angeordnet sind und sich alternierend überlappen, wie dies aus Fig. 7 ersichtlich ist, und jeweils einen Sitz für die zugeordnete Statorspule 22, 23 bereitstellen.

So sind an dem inneren Statorteil 25 erste innere Eingriffsabschnitte 255, 256 geformt, die hin zu dem ersten äußeren Statorteil 26 weisen und mit ersten äußeren Eingriffsabschnitten 262, 263 des ersten äußeren Statorteils 26 alternierend und überlappend angeordnet sind, wie dies aus Fig. 7 ersichtlich ist. Die Eingriffsabschnitte 255, 256, 262, 263 greifen gemeinsam in einen Spulenkörper der zugeordneten Statorspule 22 ein und weisen jeweils an umlaufenden Kanten eine Fase 259, 264 auf, die das Fügen in die Statorspule 22 erleichtert.

Zudem bildet das innere Statorteil 25 zweite innere Eingriffsabschnitte 257, 258 aus, die überlappend und alternierend mit zweiten äußeren Eingriffsabschnitten 272, 273 des zweiten äußeren Statorteils 27 angeordnet sind, wie dies aus Fig. 7 ersichtlich ist. Wiederum weisen die Eingriffsabschnitte 257, 258, 272, 273 Fasen 259, 274 an umlaufenden Kanten auf, die das Fügen in einen Spulenkörper der zugeordneten Statorspule 23 erleichtern. Die Eingriffsabschnitte 257, 258, 272, 273 bilden wiederum gemeinsam einen Sitz für die zugeordnete Statorspule 23 aus.

Dadurch, dass die Eingriffsabschnitte 255, 256, 262, 263; 257, 258, 272, 273 für jeden magnetischen Kreis im Sandwich zueinander angeordnet sind und gemeinsam in den Spulenkörper der jeweils zugeordneten Statorspule 22, 23 eingreifen, ergibt sich über die Eingriffsabschnitte 255, 256, 262, 263; 257, 258, 272, 273 eine Positionierung der Statorteile 25, 26, 27 relativ zueinander. Über die Eingriffsabschnitte 255, 256, 262, 263; 257, 258, 272, 273 sind die Statorteile 25, 26, 27 relativ zueinander gehalten und durch den Eingriff in die jeweils zugeordnete Statorspule 22, 23 in bestimmungsgemäßer Weise zueinander positioniert.

Dadurch, dass das innere Statorteil 25 hierbei integral und einstückig gefertigt ist, ergibt sich eine erhöhte Steifigkeit für den Stator 20. Es ergibt sich zudem eine einfache Herstellung des elektrischen Motors 2, weil auf einen Fügeprozess für separate innere Statorteile verzichtet werden kann.

Dadurch, dass an den Eingriffsabschnitten 255, 256, 262, 263; 257, 258, 272, 273 dabei an umlaufenden Kanten Fasen 259, 264, 274 geformt sind, ergibt sich ein einfaches Fügen der Statorteile 25, 26, 27 miteinander und mit den Statorspulen 22, 23, unter exakter Positionierung der Statorteile 25, 26, 27 und der Statorspulen 22, 23 zueinander.

Wie dies aus Fig. 5 ersichtlich ist, sind die Magnetanordnungen 211, 212 des Rotors 21 an der Motorwelle 210 angeordnet und dabei drehfest an der Motorwelle 210 festgelegt. Aufgrund des Winkelversatzes α zwischen den magnetischen Kreisen können die Magnetanordnungen 211, 212 mit ihren Polanordnungen nicht winkelversetzt zueinander angeordnet sein. Für die Magnetanordnungen 211, 212 können dabei Gleichteile verwendet werden, sodass sich eine einfache, kostengünstige Fertigung ergibt.

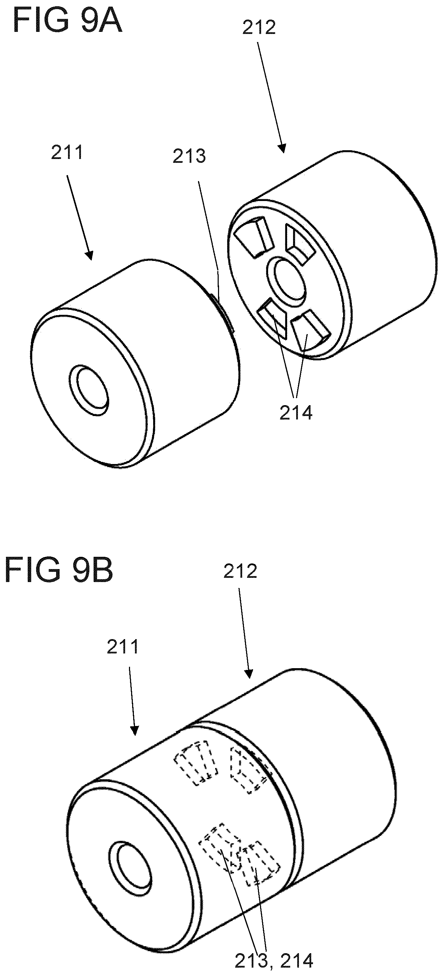

Um eine winkelrichtige Positionierung der Magnetanordnungen 211, 212 zu gewährleisten, können die Magnetanordnungen 211, 212, wie dies in Fig. 9A und 9B dargestellt ist, jeweils Formschlusselemente 213, 214 in Form von Erhebungen und/oder Vertiefungen aufweisen, die bei Ansetzen der Magnetanordnungen 211, 212 in komplementärer Weise ineinander eingreifen und somit die Magnetanordnungen 211, 212 aufgrund einer formschlüssigen Wechselwirkung in winkelrichtiger Weise selbsttätig zueinander positionieren. Es ergibt sich ein einfaches Anordnen und Fügen der Magnetanordnungen 211, 212 an der Motorwelle 210.

In einem anderen, in Fig. 10 dargestellten Ausführungsbeispiel ist lediglich eine (einzige) Magnetanordnung 211' an der Motorwelle 210 angeordnet. Die Magnetanordnung 211' wirkt mit den beiden magnetischen Kreisen, die durch die ersten inneren Statorpole 252 und die ersten äußeren Statorpole 261 und durch die zweiten inneren Statorpole 253 und die zweiten äußeren Statorpole 271 gebildet sind, zusammen und erstreckt sich entsprechend über eine solche axiale Länge an der Motorwelle 210, dass die Magnetanordnung 211' in den Bereich beider magnetischer Kreise erstreckt ist.

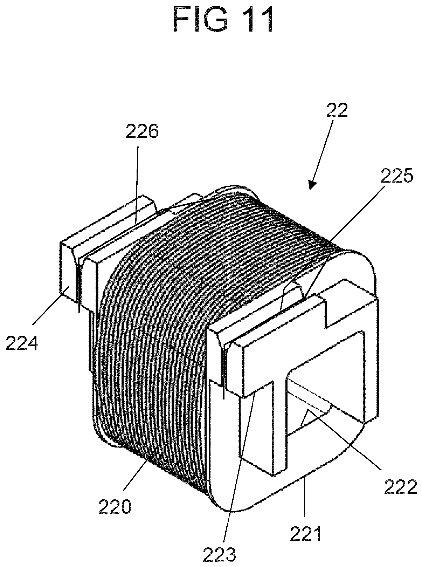

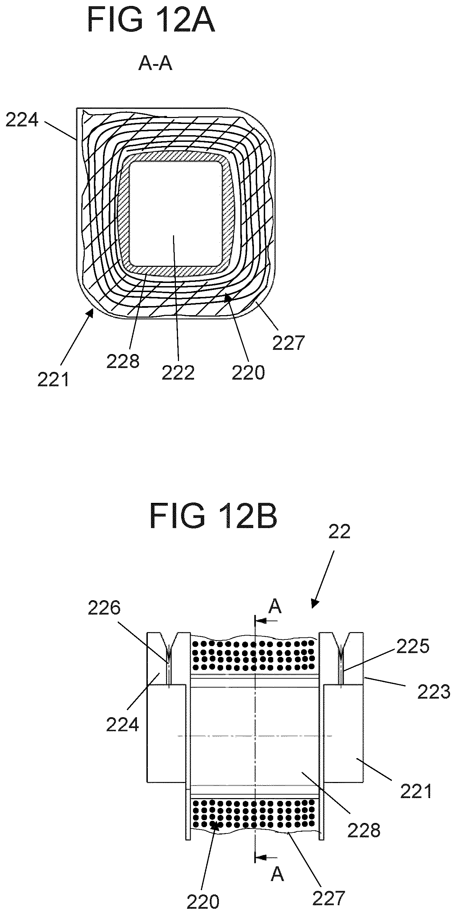

Fig. 11 und 12A, 12B zeigen Ansichten einer Statorspule 22, wobei die Statorspulen 22, 23 vorzugsweise identisch ausgestaltet sind und somit das anhand von Fig. 11 und 12A, 12B Beschriebene ganz identisch auch für die Statorspule 23 gilt.

Die Statorspule 22 weist einen Spulenkörper 221 auf, der einen Wickelabschnitt 228 ausbildet, an dem eine Spulenwindung 220 angeordnet ist. Die Spulenwindung 220 ist durch einen um den Wickelabschnitt 228 gewickelten Draht ausgebildet, der mit Drahtenden 225, 226 über Drahtführungen 223, 224 von dem Wickelabschnitt 228 weggeführt und hin zu einer Platine einer Steuereinheit 24 verlegt ist, wie dies aus Fig. 11 in Zusammenschau mit Fig. 3 ersichtlich ist.

Die Drahtenden 225, 226 können unmittelbar stoffschlüssig an die Platine angeschlossen sein, beispielsweise über eine Lötverbindung. Alternativ können die Drahtenden 225, 226 auch an Lötpins, die dem Spulenkörper 221 festgelegt sind, angeschlossen sein, über die die Statorspule 22 in zugeordnete Öffnungen der Platine eingesetzt und mit der Platine verlötet werden kann.

Der Statorkörper 221 bildet eine Eingriffsöffnung 222 aus, in die die Eingriffsabschnitte 255, 256, 262, 263 des zugeordneten magnetischen Kreises des Stators 20 eingreifen und über die somit eine mechanische Positionierung der Statorspule 22 an den Statorteilen 25, 26, 27 und zudem eine Einspeisung eines magnetischen Flusses erfolgt.

Wie dies aus Fig. 12A und 12B ersichtlich ist, weist der Wickelabschnitt 228 eine ballige Form ohne scharfe Kanten auf. Der die Spulenwindung 220 ausbildende Draht kann somit in dicht gepackter Weise an dem Wickelabschnitt 228 angeordnet werden, wobei zusätzlich eine Formmasse 227, zum Beispiel in Form einer Vergussmasse, die Spulenwindung 220 kapseln kann, um auf diese Weise eine Drahtbewegung im Betrieb und eine damit einhergehende Geräuschentwicklung zu verhindern.

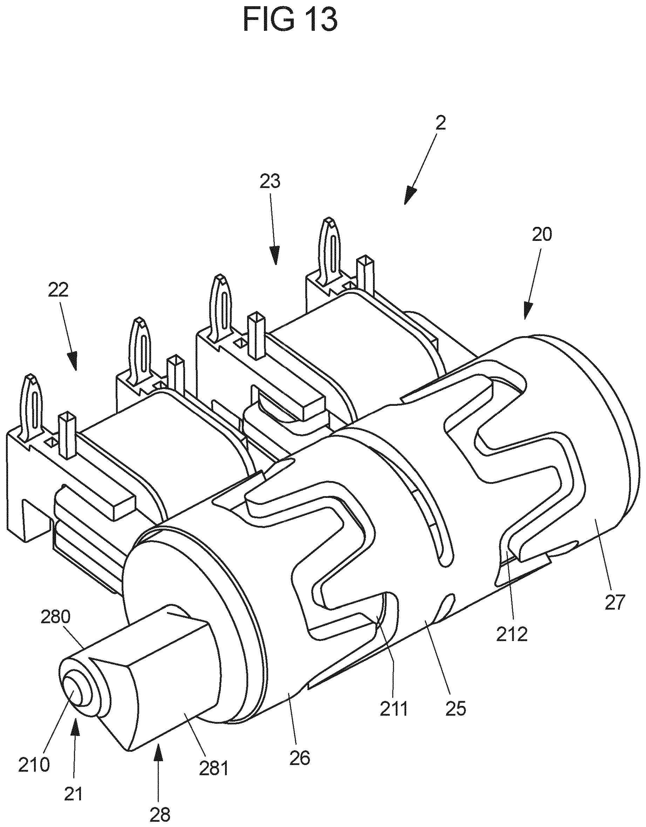

Fig. 13 zeigt ein Ausführungsbeispiel eines Aktuators 1, der einen Motor 2 aufweist, der in seinen funktionalen Bestandteilen identisch wie der Motor 2 gemäß den vorangehend beschriebenen Ausführungsbeispielen ausgestaltet sein kann, sodass mit Blick auf die funktionalen Bestandteile des Motors 2 auf die vorangehenden Erläuterungen verwiesen wird.

Insbesondere weist der Motor 2 einen Stator 20 und einen um eine Drehachse drehbaren Rotor 21 auf. Der Stator 20 wird durch ein inneres Statorteil 25 und äußere Statorteile 26, 27 gebildet. Statorspulen 22, 23 sind mit den Statorteilen 25, 26, 27 wirkverbunden, um einen magnetischen Fluss zwischen Statorpolen des Stators 20 zu erzeugen. An dem Rotor 21 sind Magnetanordnungen 211, 212 zum Bereitstellen eines Erregerfelds angeordnet.

Der Aktuator gemäß Fig. 13 dient zum Erzeugen einer Vibration, beispielsweise für eine Vibrationseinrichtung, um an einem Fahrzeugsitz eine Massagefunktion zur Verfügung zu stellen.

Bei dem dargestellten Ausführungsbeispiel ist an der Motorwelle 210 des Rotors 21 hierzu ein Unwuchtelement 28 angeordnet, das axial außerhalb des durch das innere Statorteil 25 und die äußeren Statorteile 26, 27 gebildeten Stators 20 angeordnet ist. Das Unwuchtelement 28 weist einen Verbindungsabschnitt 280 auf, über den das Unwuchtelement 28 mit der Motorwelle 210 verbunden ist. Ein exzentrischer Abschnitt 281 steht exzentrisch von der Motorwelle 210 ab und erzeugt auf diese Weise eine Unwucht an dem Rotor 21.

Wird der Rotor 21 in eine Drehbewegung versetzt, bewirkt die Unwucht an dem Rotor 21 eine Vibration am Motor 2, die auf eine anzuregende Baugruppe übertragen wird, an der der Motor 2 angeordnet ist. Die anzuregende Baugruppe wird auf diese Weise in eine vibrierende Bewegung versetzt.

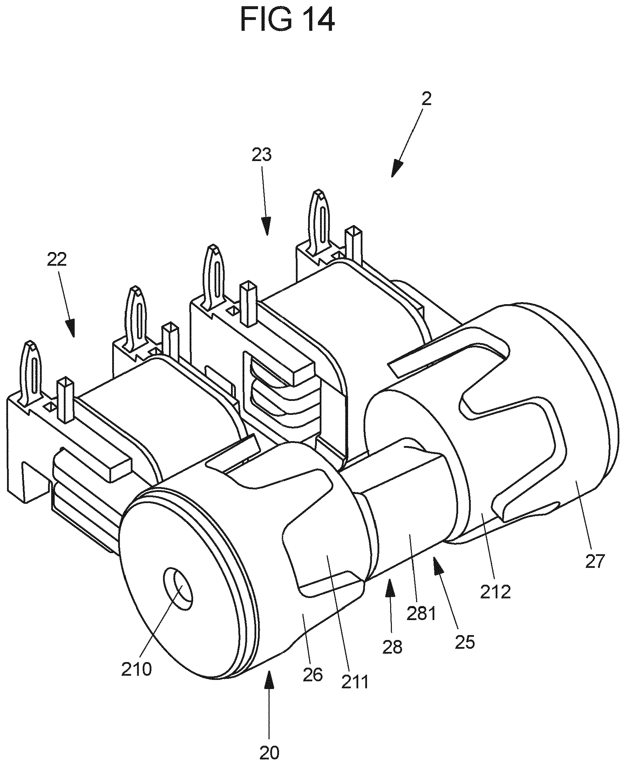

Bei einem anderen, in Fig. 14 dargestellten Ausführungsbeispiel ist das Unwuchtelement 28 nicht axial außerhalb des Stators 20 angeordnet, sondern in den Stator 20 integriert, indem das Unwuchtelement 28 axial am Orte des (in Fig. 14 zur erleichterten Übersicht nicht dargestellten) inneren Statorteils 25 angeordnet und dabei radial innerhalb des inneren Statorteils 25 eingefasst ist. Das Unwuchtelement 28 ist hierbei zwischen den den unterschiedlichen Statorpolanordnungen zugeordneten Magnetanordnungen 211, 212 an der Motorwelle 210 angeordnet.

Wie bei dem Ausführungsbeispiel gemäß Fig. 13 ist das Unwuchtelement 28 mit der Motorwelle 210 verbunden und wird bei einer Drehbewegung des Rotors 21 in eine Drehbewegung versetzt, sodass aufgrund der Unwucht des exzentrischen Abschnitts 281 des Unwuchtelements 28 eine Vibration erzeugt wird.

Der der Erfindung zugrunde liegende Gedanke ist nicht auf die vorangehend beschriebenen Ausführungsbeispiele beschränkt, sondern lässt sich auch in anderer Weise verwirklichen.

Die magnetischen Kreise weisen an ihren Statorpolen nicht zwingend einen Winkelversatz zueinander auf. Die magnetischen Kreise können auch ohne Winkelversatz zueinander ausgebildet sein. In diesem Fall können beispielsweise die Magnetanordnungen an der Motorwelle einen Winkelversatz in ihren Magnetpolanordnungen zueinander aufweisen.

Bei den beschriebenen Ausführungsbeispielen ist der Stator 10-polig ausgebildet. Jeder magnetische Kreis weist somit eine Anordnung von zehn Statorpolen auf. Auch andere Polzahlen sind denkbar und möglich, beispielsweise eine 8-polige oder eine 12-polige Anordnung.

Dadurch, dass die Statorspulen seitlich zum Stator angeordnet sind, ergibt sich eine kompakte Bauform, bei der insbesondere der Durchmesser des Stators im Vergleich zu einer Anordnung, bei der die Statorspulen umfänglich um den Stator gewickelt sind, reduziert sein kann. Entsprechend kann ein Aktuator mit geringer Bauhöhe und somit geringem Bauraumbedarf geschaffen werden.

### Bezugszeichenliste

- 1: Aktuator
- 10: Gehäuse
- 2: Motor
- 20: Stator
- 21: Rotor
- 210: Motorwelle
- 211, 212: Magnetanordnung
- 211': Magnetanordnung
- 213, 214: Formschlusselement
- 22, 23: Spule
- 220, 230: Spulenwindung
- 221: Spulenkörper
- 222: Eingriffsöffnung
- 223, 224: Drahtführung
- 225, 226: Drahtende
- 227: Formmasse
- 228: Wickelabschnitt
- 24: Steuereinheit (Platine)
- 25: Statorteil
- 250, 251: Körperabschnitt
- 252, 253: Statorpol
- 254: Schlitz
- 255-258: Eingriffsabschnitt (Lasche)
- 259: Fase
- 26: Statorteil
- 260: Körperabschnitt
- 261: Statorpol
- 262, 263: Eingriffsabschnitt (Lasche)
- 264: Fase
- 27: Statorteil
- 270: Körperabschnitt
- 271: Statorpol
- 272, 273: Eingriffsabschnitt (Lasche)
- 274: Fase
- 28: Unwuchtelement
- 280: Verbindungsabschnitt
- 281: Exzentrischer Abschnitt
- 3: Getriebe
- 30: Antriebsschnecke
- 300: Schneckenverzahnung
- 31: Getrieberad
- 310: Stirnradverzahnung
- 311: Ritzel
- 32: Getrieberad
- 320: Stirnradverzahnung
- 321: Ritzel
- 33: Abtriebsrad
- 330: Stirnradverzahnung
- 331: Erstes Abtriebselement (Ritzel)
- 332: Zweites Abtriebselement (Verzahnungseingriff)
- 4: Fahrzeugbaugruppe
- α: Winkel
- D: Drehachse
- M1, M2: Mittellinie

## Patentansprüche

1. Aktuator (1), mit einem elektrischen Motor (2), der einen Stator (20) und einen um eine Drehachse (D) zu dem Stator (20) drehbaren Rotor (21) aufweist,
wobei der Stator (20) ein inneres Statorteil (25), ein erstes äußeres Statorteil (26) und ein zweites äußeres Statorteil (27) aufweist, wobei das innere Statorteil (25), das erste äußere Statorteil (26) und das zweite äußere Statorteil (27) entlang der Drehachse (D) aneinander angereiht sind und das innere Statorteil (25) an einer ersten, axial dem ersten äußeren Statorteil (26) zugewandten Seite eine Anordnung von ersten inneren Statorpolen (252) und an einer zweiten, axial dem zweiten äußeren Statorteil (27) zugewandten Seite eine Anordnung von zweiten inneren Statorpolen (253) ausbildet, wobei die ersten inneren Statorpole (252) und die zweiten inneren Statorpole (253) integral und einstückig miteinander verbunden sind, **dadurch gekennzeichnet, dass** der Motor (2) eine erste Statorspule (22) und eine zweite Statorspule (23) aufweist, wobei das innere Statorteil (25) zumindest einen ersten inneren Eingriffsabschnitt (255, 256), der in die erste Statorspule (22) eingreift, und zumindest einen zweiten inneren Eingriffsabschnitt (257, 258), der in die zweite Statorspule (23) eingreift, aufweist,
wobei der zumindest eine erste innere Eingriffsabschnitt (255, 256) und der zumindest eine zweite innere Eingriffsabschnitt (257, 258) radial außerhalb der ersten inneren Statorpole (252) und der zweiten inneren Statorpole (253) geformt sind, so dass, die erste Statorspule (22) und die zweite Statorspule (23) nicht koaxial zum inneren Statorteil (25) sind.

2. Aktuator (1) nach Anspruch 1, **dadurch gekennzeichnet, dass** das innere Statorteil (25) einen ersten Körperabschnitt (250), an dem die ersten Statorpole (252) geformt sind, und einen integral und einstückig mit dem ersten Körperabschnitt (250) geformten, zweiten Körperabschnitt (251), an dem die zweiten Statorpole (253) geformt sind, aufweist.

3. Aktuator (1) nach Anspruch 1 oder 2, **dadurch gekennzeichnet, dass** das innere Statorteil (25) als Stanz-Biege-Teil geformt ist.

4. Aktuator (1) nach einem der Ansprüche 1 bis 3, **dadurch gekennzeichnet, dass** das erste äußere Statorteil (26) eine Anordnung von ersten äußeren Statorpolen (261) zum elektromagnetischen Zusammenwirken mit den ersten inneren Statorpolen (252) ausbildet und/oder das zweite äußere Statorteil (27) eine Anordnung von zweiten äußeren Statorpolen (271) zum elektromagnetischen Zusammenwirken mit den zweiten inneren Statorpolen (253) ausbilden.

5. Aktuator (1) nach Anspruch 4, **dadurch gekennzeichnet, dass** die ersten äußeren Statorpole (261) und die ersten inneren Statorpole (252) derart ineinander eingreifen, dass die ersten äußeren Statorpole (261) und die ersten inneren Statorpole (252) entlang einer um die Drehachse (D) gerichteten Umfangsrichtung alternierend aneinander angereiht sind, und/oder dass die zweiten äußeren Statorpole (271) und die zweiten inneren Statorpole (253) derart ineinander eingreifen, dass die zweiten äußeren Statorpole (271) und die zweiten inneren Statorpole (253) entlang einer um die Drehachse (D) gerichteten Umfangsrichtung alternierend aneinander angereiht sind.

6. Aktuator (1) nach einem der vorangehenden Ansprüche, **dadurch gekennzeichnet, dass** die ersten inneren Statorpole (252) und die zweiten inneren Statorpole (253), betrachtet entlang einer gedachten, das innere Statorteil (25) umfänglich um die Drehachse (D) einhüllenden Hüllfläche, trapezförmig sind.

7. Aktuator (1) nach einem der vorangehenden Ansprüche, **dadurch gekennzeichnet, dass** die ersten inneren Statorpole (252) und die zweiten inneren Statorpole (253), betrachtet entlang einer Umfangsrichtung um die Drehachse (D), einen Winkelversatz (α) zueinander aufweisen.

8. Aktuator (1) nach einem der vorangehenden Ansprüche , **dadurch gekennzeichnet, dass** der zumindest eine erste innere Eingriffsabschnitt (255, 256) und/oder der zumindest eine zweite innere Eingriffsabschnitt (257, 258) an zumindest einer Kante eine Fase (259) aufweisen.

9. Aktuator (1) nach einem der vorangehenden Ansprüche, **dadurch gekennzeichnet, dass** das erste äußere Statorteil (26) zumindest einen ersten äußeren Eingriffsabschnitt (262, 263) aufweist, der überlappend mit dem zumindest einen ersten inneren Eingriffsabschnitt (255, 256) angeordnet ist und in die erste Statorspule (22) eingreift, und/oder das zweite äußere Statorteil (27) zumindest einen zweiten äußeren Eingriffsabschnitt (272, 273) aufweist, der überlappend mit dem zumindest einen zweiten inneren Eingriffsabschnitt (257, 258) angeordnet ist und in die zweite Statorspule (23) eingreift.

10. Aktuator (1) nach einem der vorangehenden Ansprüche, **dadurch gekennzeichnet, dass** die erste Statorspule (22) und die zweite Statorspule (23) jeweils einen Spulenkörper (221) und eine an dem Spulenkörper (221) angeordnete Spulenwindung (220, 230) aufweisen.

11. Aktuator (1) nach Anspruch 10, **dadurch gekennzeichnet, dass** der Spulenkörper (221) eine Eingriffsöffnung (222) ausbildet, in die der zugeordnete innere Eingriffsabschnitt (255-258) des inneren Statorteils (25) eingreift.

12. Aktuator (1) nach Anspruch 10 oder 11, **dadurch gekennzeichnet, dass** der Spulenkörper (221) einen Wickelabschnitt (228) ausbildet, an dem die Spulenwindung (220, 230) angeordnet ist und der eine ballige Form aufweist.

13. Aktuator (1) nach einem der Ansprüche 10 bis 12, **dadurch gekennzeichnet, dass** der Motor (2) eine Steuereinheit (24) aufweist, wobei die Spulenwindung (220) jeder Statorspule (22, 23) mit zumindest einem Drahtende (225, 226) mit der Steuereinheit (24) elektrisch verbunden ist.

14. Aktuator (1) nach einem der vorangehenden Ansprüche, **dadurch gekennzeichnet, dass** der Rotor (21) eine der Anordnung der ersten inneren Statorpole (252) zugeordnete, erste Magnetanordnung (211) und eine der Anordnung der zweiten inneren Statorpole (253) zugeordnete, zweite Magnetanordnung (212) aufweist, wobei die erste Magnetanordnung (211) und die zweite Magnetanordnung (212) axial entlang der Drehachse (D) zueinander versetzt sind, oder
dass der Rotor (21) eine Magnetanordnung (211') aufweist, die ausgebildet ist, sowohl mit den ersten inneren Statorpolen (252) als auch mit den zweiten inneren Statorpolen (253) zum Erzeugen eines Drehmoments an dem Rotor (21) zusammenzuwirken.

15. Aktuator (1) nach einem der vorangehenden Ansprüche, **gekennzeichnet durch** ein Unwuchtelement (28), das mit dem Rotor (21) verbunden ist und einen zur Drehachse (D) exzentrischen Abschnitt (281) zur Bereitstellung einer Unwucht an dem Rotor (21) aufweist.

## Claims

1. Actuator (1) comprising an electric motor (2) having a stator (20) and a rotor (21) which can be rotated relative to the stator (20) about an axis of rotation (D),
wherein the stator (20) comprises an inner stator part (25), a first outer stator part (26) and a second outer stator part (27), wherein the inner stator part (25), the first outer stator part (26) and the second outer stator part (27) are lined up next to one another along the axis of rotation (D), and the inner stator part (25) forms an arrangement of first inner stator poles (252) on a first side axially facing the first outer stator part (26), and forms an arrangement of second inner stator poles (253) on a second side axially facing the second outer stator part (27), wherein the first inner stator poles (252) and the second inner stator poles (253) are connected to one another integrally and in a single piece,
**characterized in that** the motor (2) comprises a first stator coil (22) and a second stator coil (23), wherein the inner stator part (25) comprises at least one first inner engagement portion (255, 256) which engages in the first stator coil (22) and at least one second inner engagement portion (257, 258) which engages in the second stator coil (23),
wherein the at least one first inner engagement portion (255, 256) and the at least one second inner engagement portion (257, 258) are formed radially outside the first inner stator poles (252) and the second inner stator poles (253), such that the first stator coil (22) and the second stator coil (23) are not coaxial with the inner stator part (25).

2. Actuator (1) as claimed in claim 1, **characterized in that** the inner stator part (25) comprises a first body portion (250) on which the first stator poles (252) are formed, and a second body portion (251) which is formed integrally and in a single piece with the first body portion (250) and on which the second stator poles (253) are formed.

3. Actuator (1) as claimed in claim 1 or 2, **characterized in that** the inner stator part (25) is formed as a stamped-bent part.

4. Actuator (1) as claimed in one of claims 1 to 3, **characterized in that** the first outer stator part (26) forms an arrangement of first outer stator poles (261) for electromagnetic cooperation with the first inner stator poles (252) and/or the second outer stator part (27) forms an arrangement of second outer stator poles (271) for electromagnetic cooperation with the second inner stator poles (253).

5. Actuator (1) as claimed in claim 4, **characterized in that** the first outer stator poles (261) and the first inner stator poles (252) engage in one another such that the first outer stator poles (261) and the first inner stator poles (252) are lined upnext to one another alternately in a circumferential direction oriented about the axis of rotation (D), and/or **in that** the second outer stator poles (271) and the second inner stator poles (253) engage in one another such that the second outer stator poles (271) and the second inner stator poles (253) are lined up next to one another alternately in a circumferential direction oriented about the axis of rotation (D).

6. Actuator (1) as claimed in one of the preceding claims, **characterized in that** the first inner stator poles (252) and the second inner stator poles (253) are trapezoidal, when viewed along an imaginary envelope surface circumferentially enclosing the inner stator part (25) about the axis of rotation (D).

7. Actuator (1) as claimed in one of the preceding claims, **characterized in that** the first inner stator poles (252) and the second inner stator poles (253) comprise an angular offset (α) to one another, when viewed in a circumferential direction about the axis of rotation (D).

8. Actuator (1) as claimed in one of the preceding claims, **characterized in that** the at least one first inner engagement portion (255, 256) and/or the at least one second inner engagement portion (257, 258) comprise a chamfer (259) on at least one edge.

9. Actuator (1) as claimed in one of the preceding claims, **characterized in that** the first outer stator part (26) comprises at least one first outer engagement portion (262, 263) which is arranged so as to overlap with the at least one first inner engagement portion (255, 256) and engages in the first stator coil (22), and/or the second outer stator part (27) comprises at least one second outer engagement portion (272, 723) which is arranged so as to overlap with the at least one second inner engagement portion (257, 258) and engages in the second stator coil (23).

10. Actuator (1) as claimed in one of the preceding claims, **characterized in that** each, the first stator coil (22) and the second stator coil (23), comprises a coil body (221) and a coil winding (220, 230) arranged on the coil body (221).

11. Actuator (1) as claimed in claim 10, **characterized in that** the coil body (221) forms an engagement opening (222) in which the assigned inner engagement portion (255-258) of the inner stator part (25) engages.

12. Actuator (1) as claimed in claim 10 or 11, **characterized in that** the coil body (221) forms a winding portion (228) on which the coil winding (220, 230) is arranged and which has a crowned shape.

13. Actuator (1) as claimed in one of claims 10 to 12, **characterized in that** the motor (2) comprises a control unit (24), wherein the coil winding (220) of each stator coil (22, 23) is electrically connected by at least one wire end (225, 226) to the control unit (24).

14. Actuator (1) as claimed in in one of the preceding claims, **characterized in that** the rotor (21) comprises a first magnet arrangement (211) assigned to the arrangement of the first inner stator poles (252) and a second magnet arrangement (212) assigned to the arrangement of the second inner stator poles (253), wherein the first magnet arrangement (211) and the second magnet arrangement (212) are offset to one another axially along the axis of rotation (D), or
the rotor (21) comprises a magnet arrangement (211') which is configured to cooperate both with the first inner stator poles (252) and with the second inner stator poles (253) for generating a torque on the rotor (21).

15. Actuator (1) as claimed in one of the preceding claims, **characterized by** an imbalance element (28) which is connected to the rotor (21) and comprises an eccentric portion (281) relative to the axis of rotation (D) for providing an imbalance on the rotor (21).

## Revendications

1. Actionneur (1), comprenant un moteur électrique (2) qui comporte un stator (20) et un rotor (21) pouvant tourner autour d'un axe de rotation (D) par rapport au stator (20),
dans lequel le stator (20) comporte une partie de stator intérieure (25), une première partie de stator extérieure (26) et une deuxième partie de stator extérieure (27), la partie de stator intérieure (25), la première partie de stator extérieure (26) et la deuxième partie de stator extérieure (27) étant alignées les unes aux autres le long de l'axe de rotation (D), et la partie de stator intérieure (25) forme, sur un premier côté faisant face axialement à la première partie de stator extérieure (26), un agencement de premiers pôles de stator intérieurs (252) et, sur un deuxième côté faisant face axialement à la deuxième partie de stator extérieure (27), un agencement de deuxièmes pôles de stator intérieurs (253), les premiers pôles de stator intérieurs (252) et les deuxièmes pôles de stator intérieurs (253) étant reliés l'un à l'autre de manière solidaire et d'un seul tenant,
**caractérisé en ce que** le moteur (2) comporte une première bobine de stator (22) et une deuxième bobine de stator (23), la partie de stator intérieure (25) comportant au moins une première section d'engagement intérieure (255, 256) qui s'engage dans la première bobine de stator (22), et au moins une deuxième section d'engagement intérieure (257, 258) qui s'engage dans la deuxième bobine de stator (23),
ladite au moins une première section d'engagement intérieure (255, 256) et ladite au moins une deuxième section d'engagement intérieure (257, 258) étant formées radialement à l'extérieur des premiers pôles de stator intérieurs (252) et des deuxièmes pôles de stator intérieurs (253), de sorte que la première bobine de stator (22) et la deuxième bobine de stator (23) ne sont pas coaxiales à la partie de stator intérieure (25).

2. Actionneur (1) selon la revendication 1, **caractérisé en ce que** la partie de stator intérieure (25) comporte une première section de corps (250) sur laquelle sont formés les premiers pôles de stator (252), et une deuxième section de corps (251), formée d'un seul tenant avec la première section de corps (250), sur laquelle sont formés les deuxièmes pôles de stator (253).

3. Actionneur (1) selon la revendication 1 ou 2, **caractérisé en ce que** la partie de stator intérieure (25) est formée comme pièce découpée et pliée.

4. Actionneur (1) selon l'une quelconque des revendications 1 à 3, **caractérisé en ce que** la première partie de stator extérieure (26) forme un agencement de premiers pôles de stator extérieurs (261) destinés à coopérer électromagnétiquement avec les premiers pôles de stator intérieurs (252) et/ou **en ce que** la deuxième partie de stator extérieure (27) forme un agencement de deuxièmes pôles de stator extérieurs (271) destinés à coopérer électromagnétiquement avec les deuxièmes pôles de stator intérieurs (253).

5. Actionneur (1) selon la revendication 4, **caractérisé en ce que** les premiers pôles de stator extérieurs (261) et les premiers pôles de stator intérieurs (252) s'engagent les uns dans les autres de telle sorte que les premiers pôles de stator extérieurs (261) et les premiers pôles de stator intérieurs (252) sont alignés en alternance les uns aux autres le long d'une direction circonférentielle orientée autour de l'axe de rotation (D), et/ou **en ce que** les deuxièmes pôles de stator extérieurs (271) et les deuxièmes pôles de stator intérieurs (253) s'engagent les uns dans les autres de telle sorte que les deuxièmes pôles de stator extérieurs (271) et les deuxièmes pôles de stator intérieurs (253) sont alignés en alternance les uns aux autres le long d'une direction circonférentielle orientée autour de l'axe de rotation (D).

6. Actionneur (1) selon l'une quelconque des revendications précédentes, **caractérisé en ce que** les premiers pôles de stator intérieurs (252) et les deuxièmes pôles de stator intérieurs (253), vue le long d'une surface d'enveloppe imaginaire enveloppant la partie de stator intérieure (25) sur sa circonférence autour de l'axe de rotation (D), sont de forme trapézoïdale.

7. Actionneur (1) selon l'une quelconque des revendications précédentes, **caractérisé en ce que** les premiers pôles de stator intérieurs (252) et les deuxièmes pôles de stator intérieurs (253), vue le long d'une direction circonférentielle autour de l'axe de rotation (D), présentent un décalage angulaire (α) l'un par rapport à l'autre.

8. Actionneur (1) selon l'une quelconque des revendications précédentes, **caractérisé en ce que** ladite au moins une première section d'engagement intérieure (255, 256) et/ou ladite au moins une deuxième section d'engagement intérieure (257, 258) présentent un chanfrein (259) sur au moins un bord.

9. Actionneur (1) selon l'une quelconque des revendications précédentes, **caractérisé en ce que** la première partie de stator extérieure (26) comporte au moins une première section d'engagement extérieure (262, 263) qui est agencée de manière à chevaucher ladite au moins une première section d'engagement intérieure (255, 256) et qui s'engage dans la première bobine de stator (22), et/ou la deuxième partie de stator extérieure (27) comporte au moins une deuxième section d'engagement extérieure (272, 273) qui est agencée de manière à chevaucher ladite au moins une deuxième section d'engagement intérieure (257, 258) et s'engage dans la deuxième bobine de stator (23).

10. Actionneur (1) selon l'une quelconque des revendications précédentes, **caractérisé en ce que** la première bobine de stator (22) et la deuxième bobine de stator (23) comportent chacune un corps de bobine (221) et une spire de bobine (220, 230) agencée sur le corps de bobine (221).

11. Actionneur (1) selon la revendication 10, **caractérisé en ce que** le corps de bobine (221) présente une ouverture d'engagement (222) dans laquelle s'engage la section d'engagement intérieure associée (255-258) de la partie de stator intérieure (25).

12. Actionneur (1) selon la revendication 10 ou 11, **caractérisé en ce que** le corps de bobine (221) forme une section d'enroulement (228) sur laquelle est agencée la spire de bobine (220, 230) et qui présente une forme bombée.

13. Actionneur (1) selon l'une quelconque des revendications 10 à 12, **caractérisé en ce que** le moteur (2) comporte une unité de commande (24), la spire de bobine (220) de chaque bobine de stator (22, 23) étant relié électriquement à l'unité de commande (24) par au moins une extrémité de fil (225, 226).

14. Actionneur (1) selon l'une quelconque des revendications précédentes, **caractérisé en ce que** le rotor (21) comporte un premier ensemble magnétique (211) associé à l'agencement des premiers pôles de stator intérieurs (252) et un deuxième ensemble magnétique (212) associé à l'agencement des deuxièmes pôles de stator intérieurs (253), le premier ensemble magnétique (211) et le deuxième ensemble magnétique (212) étant décalés axialement l'un par rapport à l'autre le long de l'axe de rotation (D), ou
**que** le rotor (21) comporte un ensemble magnétique (211') qui est conçu pour coopérer à la fois avec les premiers pôles de stator intérieurs (252) et avec les deuxièmes pôles de stator intérieurs (253) pour générer un couple sur le rotor (21).

15. Actionneur (1) selon l'une quelconque des revendications précédentes, **caractérisé par** un élément de balourd (28) qui est relié au rotor (21) et comporte une section (281) excentrée par rapport à l'axe de rotation (D) pour créer un balourd sur le rotor (21).
